# EUROPEAN PATENT APPLICATION

(11) **EP 1 988 440 A1**
(43) Date of publication of application: **05.11.2008**
(21) Application number: 07008955.2
(22) Date of filing: 03.05.2007
(51) Int. Cl.: G05D 16/20

(54) **Fluid valve**

(71) Applicant: Kongsberg Automotive AB, 56528 Mullsjö (SE)
(72) Inventor: Dankbaar, Frank, 55315 Jönköping (SE)
(74) Representative: UEXKÜLL & STOLBERG

(57) **Abstract**

The invention provides a fluid valve (1) for controlling the pressure in a fluid chamber (2) comprising
- a valve housing (3) with an inflow opening (5) connectable to a pressure supply, an outflow opening (4) and an output opening (9) to said fluid chamber (2),
- an actuator (8) having a rest position and being movable in at least two directions, namely a first direction away from the inflow opening (5) and a second direction away from the outflow opening (4),
- said actuator (8) having at least two sealing elements (7, 6), namely an inflow sealing element (7) and an outflow sealing element (6),
- at least two sealing surfaces (5a, 4a), namely an inflow sealing surface (5a) and an outflow sealing surface (4a), arranged in said valve housing (3) enclosing said inflow opening (5) and said outflow opening (4), respectively, such that the fluid is prevented from flowing through the inflow opening (5) and the outflow opening (4), respectively, when said inflow sealing element (7) rests on said inflow sealing surface (5a) and said outflow sealing element (6) rests on said outflow sealing surface (4a), respectively,

characterised in that
both said inflow sealing element (7) as well as said outflow sealing element (6) rest on their respective sealing surfaces (5a, 4a) when the actuator (8) is in its rest position.

## Description

The present invention relates to a fluid valve for controlling the inflow and the outflow of a fluid chamber, which can e.g. be an air bladder, in particular for variable support in vehicle seats, such as a variable lumbar support.

Fluid valves can be used in a vast variety of applications. One of which is the control of the air pressure in a bladder used for massaging and/or a lumbar support in seats or couches in general and in vehicle seats in particular. It is desirable to control fluid valves in such applications electronically.

Actuators that work in fluid valves according to a voice coil principle are well known from the prior art, e.g. from US 6,427,970, US 5,460,201 or US 5,076,537. From US 5,734,310 a magnetic solenoid valve is known that is suitable for the use as a three-way valve in e.g. a vehicle climate control device.

It is a disadvantage of the fluid valves described in the above-mentioned documents that they can not hold the pressure in an air bladder constant over a certain period of time which is instrumental for the use in an air bladder used for massaging and/or a lumbar support in seats. Furthermore, the fluid valves known from the prior art exhibit a rather complex and large design, an intense instrumentation with metal components and all in all relatively high production costs.

It is therefore the object of the present invention to provide a fluid valve with a simple, small design and that can hold the pressure in an air chamber, i.e. an air bladder, constant over a certain period of time.

This object is solved according to the present invention by the features of claim 1. Preferred embodiments of the invention are subject of the dependent claims.

According to the present invention a fluid valve for controlling the pressure in a fluid chamber is provided, wherein the fluid valve comprises
- a valve housing with an inflow opening connectable to a pressure supply, an outflow opening and an output opening to said fluid chamber,
- an actuator having a rest position and being movable in at least two directions, namely a first direction away from the inflow opening and a second direction away from the outflow opening,
- said actuator having at least two sealing elements, namely an inflow sealing element and an outflow sealing element,
- at least two sealing surfaces, namely an inflow sealing surface and an outflow sealing surface, arranged in said valve housing enclosing said inflow opening and said outflow opening, respectively, such that the fluid is prevented from flowing through the inflow opening and the outflow opening, respectively, when said inflow sealing element rests on said inflow sealing surface and said outflow sealing element rests on said outflow sealing surface, respectively,
characterised in that both said inflow sealing element as well as said outflow sealing element rest on their respective sealing surfaces when the actuator is in its rest position.

The inventive fluid valve has three states that correspond to three positions of the comprised actuator. In the rest position of the actuator the fluid valve is closed at the inflow opening as well as the outflow opening. The actuator is movable in at least two directions, namely a first direction away from the inflow opening and a second direction away from the outflow opening, such that fluid valve either opens at the inflow opening or at the outflow opening upon a movement of the actuator in the one or the other direction. The three states of the fluid valve are therefore the closed state when the actuator is in a rest position, the first actuated state when the fluid valve is opened at the inflow opening and the second actuated state when the fluid valve is opened at the outflow opening. There is no state in which the fluid valve is opened at both the inflow opening and the outflow opening. The interior of the valve housing is connected to the fluid chamber through the output opening to the fluid chamber.

In a preferred embodiment of the invention the fluid valve comprises a permanent magnet and a coil, one of which is connected to the actuator and the other one is stationary, such that the actuator moves in the first direction when a current flows through the coil in one direction, the actuator moves in the second direction when a current flows through the coil in the other direction and the actuator is in its rest position when no current flows through the coil. So, the actuation to the first actuated state and to the second actuate state, respectively, can be controlled dependent on the electrical polarity that is applied to the coil. The rest position can be reached by applying no electrical current to the coil.

Preferably, the actuator comprises an actuator body that is in mechanical contact with the inflow sealing element and the outflow sealing element. This mechanical contact causes the inflow sealing element to lift from the inflow sealing surface when the actuator body moves in the first direction while the outflow sealing element remains rested on the outflow sealing surface. On the other hand, the outflow sealing element lifts from the outflow sealing surface when the actuator body moves in the second direction while the inflow sealing element remains rested on the inflow sealing surface.

It is further advantageous if the inflow opening and the outflow opening are arranged at opposite ends of the valve housing, such that the first and the second direction are opposite to each other. Preferably, the actuator is rectilinearly movable along a straight path. It can be slidably mounted in said valve housing or bedded on rolls.

It is further preferred that the sealing elements are mounted on separate plungers, namely an inflow plunger and an outflow plunger. These plungers are positioned, preferably in parallel to each other, with their longitudinal axes essentially along the first and the second direction, respectively. Preferably, both plungers are in sliding contact with the actuator body. The inflow plunger may comprise a peripheral edge facing towards the inflow opening such that said actuator body contacts said edge with a face of the actuation body facing away from the inflow opening and pulls the inflow plunger away from the inflow opening to lift the inflow sealing element from the inflow sealing surface when the actuator body is moved in the first direction. Accordingly, the outflow plunger may comprise a peripheral edge facing towards the outflow opening such that said actuator body contacts said edge with a face of the actuation body facing away from the outflow opening and pulls the outflow plunger away from the outflow opening to lift the outflow sealing element from the outflow sealing surface when the actuator body is moved in the second direction. These faces of the actuation body facing away from the inflow opening and the outflow opening, respectively, may be annular faces enclosing separate holes in the actuator body where the inflow plunger and the outflow plunger, respectively, are fed through.

A further advantageous embodiment of the invention comprises an inflow plunger that is provided with an inflow spring biasing the inflow plunger towards the inflow opening and the actuator body in the first direction relative to the inflow plunger. Accordingly, the outflow plunger can be provided with an outflow spring biasing the outflow plunger towards the outflow opening and the actuator body in the second direction relative to the outflow plunger. Upon movement of the actuator body in the first direction the outflow spring can be compressed such that the outflow spring urges the actuator body in the second direction and, vice versa, upon movement of the actuator body in the second direction the inflow spring is compressed such that the inflow spring urges the actuator body in the first direction. By that, the inflow spring and the outflow spring, respectively, may urge the inflow plunger and the outflow plunger, respectively, and the respective sealing elements towards the opposed inflow opening and outflow opening, respectively, such that the actuator body is in its rest position in a central balanced initial state. In case of an embodiment comprising a permanent magnet and a coil, the spring forces urge the actuator in the rest position when no current flows through the coil.

The actuator may be bedded on rolls in the valve housing to facilitate the moving operation. Preferably, these rolls may comprise at least two projections one projecting into a cut in the actuator body and the other projecting into a cut in the valve housing. To keep the rolls adjusted for a rolling movement in the first and the second direction the actuator body and the valve housing may be provided with opposing hutch shaped surfaces framing the rolls.

For the use in means for massaging and/or lumbar support in seats, it is of importance to control a multitude of air bladders simultaneously. A preferred embodiment of the invention therefore provides means for connecting multiple fluid valves in parallel such that they have a common outflow channel and a common inflow channel. These can be grooves and tongues provided on the one and the other lateral side of the fluid valve, respectively. In this embodiment the common outflow channel and the common inflow channel may extend laterally and are composed of laterally extending portions of the fluid valves plugged together when the fluid valves are connected in parallel. Moreover, the openings of the fluid valves connected in parallel may also be connected to one fluid chamber such that gradual filling and deflation processes can be controlled by the number of opened and closed fluid valves.

In a further aspect the invention provides a variable support vehicle seat system, comprising a seat including an inflatable fluid chamber, a supply for pressurised fluid, and a fluid valve according to any of claims 1 - 19, wherein said fluid valve is connected with its inflow opening to the supply for pressurised fluid and with its output opening the inflatable fluid chamber.

In the following, a preferred embodiment of the invention is described in detail with references to the accompanying figures 1 to 7, where:
Figure 1 shows a cross-sectional side view and a cross-sectional top views of the fluid valve where the actuator is in rest position.
Figure 2 shows a cross-sectional side and a cross-sectional top views of the fluid valve where the actuator is moved in the first direction.
Figure 3 shows a cross-sectional side and a cross-sectional top views of the fluid valve where the actuator is moved in the second direction.
Figure 4 shows three cross-sectional side views of the fluid valve where the actuator is in the rest position, moved in the first direction and moved in the second direction, respectively.
Figure 5 shows two cross-sectional top views of three fluid valves connected in parallel to a common inflow channel and a common outflow channel where the central actuator is moved in the second direction and central actuator is moved in the first direction, respectively.
Figure 6 shows a perspective phantom view of a mechanical drawing of a fluid valve that can be connected in parallel to a common inflow channel and a common outflow channel.
Figure 7 shows a perspective longitudinal cross-sectional view of a mechanical drawing of a fluid valve that can be connected in parallel to a common inflow channel and a common outflow channel.

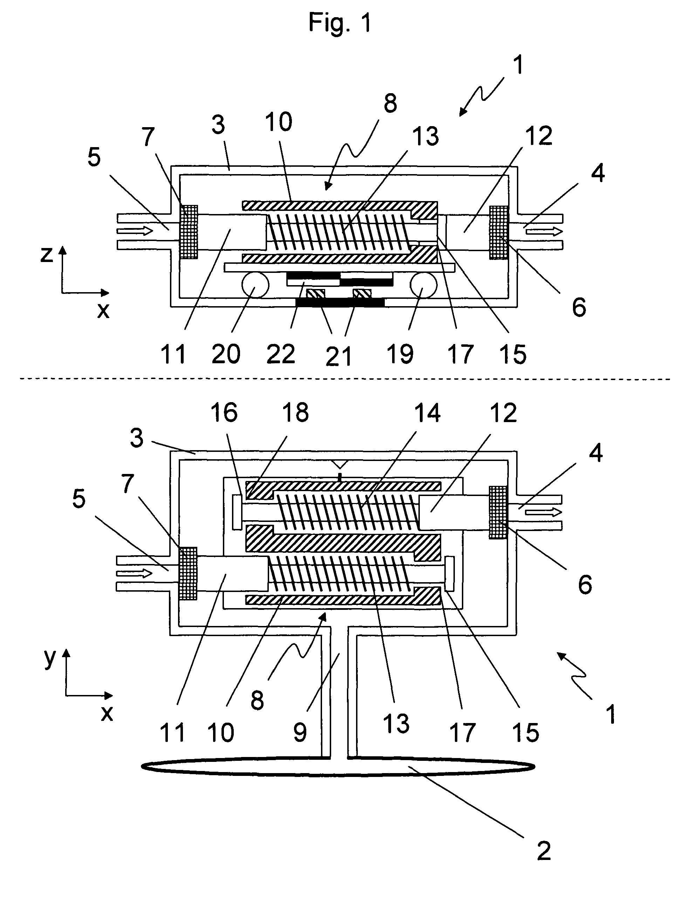

Figures 1 to 3 show three different states of the fluid valve 1. In each of the figures 1 to 3 the upper drawing is a cross-sectional side view and the lower drawing is a cross-sectional top view. The fluid valve 1 is connected to a fluid chamber 2 via an output opening 9 in the valve housing 3.

The fluid chamber 2 is displayed as a flat air bladder in figure 1. The fluid valve 1 comprises furthermore an inflow opening 5, an outflow opening 4 and a movable actuator 8. The actuator 8 is movable in two directions. The first direction is away from the inflow opening 5, i.e. to the right in figures 1 to 4. The second direction is away from the outflow opening 4, i.e. to the left in figures 1 to 4. The actuator 8 comprises an inflow sealing element 7 and an outflow sealing element 6 which are adapted to close the inflow opening 5 and the outflow opening 4, respectively, when they rest on surfaces 5a, 4a arranged in the valve housing 3 which enclose the inflow opening 5 and the outflow opening 4, respectively.

In figure 1, the actuator 8 is in a central rest position, where both the inflow sealing element 7 as well as the outflow sealing element 6 rest on their respective sealing surfaces 5a, 4a such that the fluid valve 1 is closed.

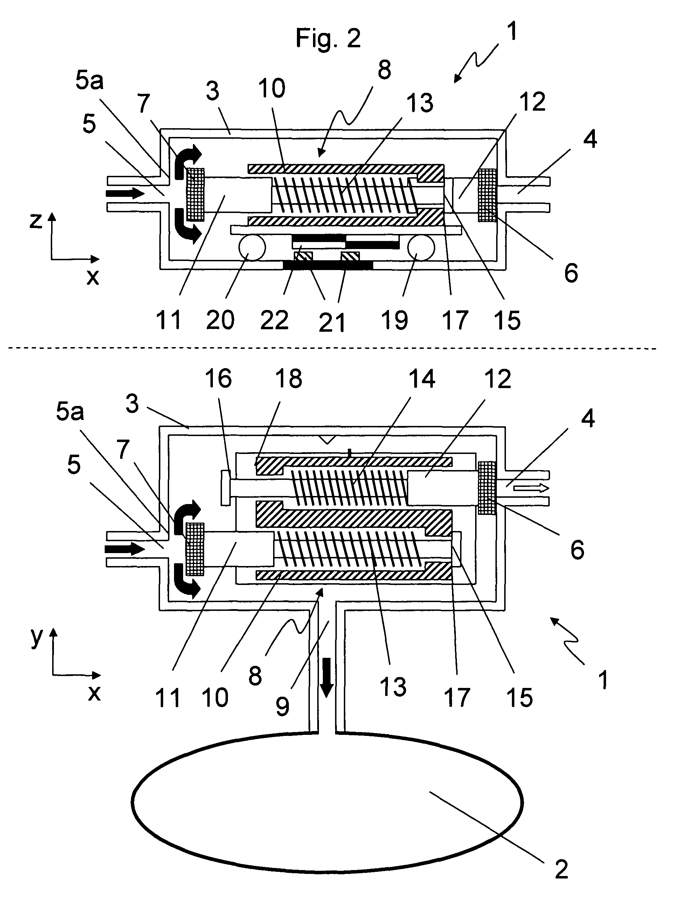

Figure 2 shows a situation when the actuator is moved in the first direction (to the right), i.e. away from the inflow opening 5. In this embodiment the actuator 8 comprises an actuator body 10 that is shown in figure 2 as moved to the first direction. The actuator body 10 is in mechanical contact with the inflow sealing element 7 via an inflow plunger 11 that is in sliding contact to the actuator body 10. In this embodiment, the inflow plunger 11 is fed through a hole in the actuator body 10. The inflow sealing element 7 lifts from the inflow sealing surface 5a when the actuator body 10 moves in the first direction, because the plunger 11 comprises a peripheral edge 15 facing towards the inflow opening 5 such that the actuator body 10 contacts the edge 15 with an annular face 17 enclosing the hole where the inflow plunger 11 is fed through and facing away from the inflow opening 5 and pulls the inflow plunger 11 together with the inflow sealing element 7 away from the inflow opening 5. In this state the fluid valve is open at the inflow opening 5 and a pressure supply (not shown) is able to press a fluid into the fluid chamber 2 via the fluid valve 1. It is important that the outflow sealing element 6 remains rested on the outflow sealing surface 4a such that only filling of the fluid chamber 2 is possible in this state. The fluid chamber 2 is illustrated as a filled air bladder and the filled arrows indicate the air flow into the fluid chamber 2.

In the preferred embodiment shown both the inflow plunger 11 and the outflow plunger 12 are provided with an inflow spring 13 and an outflow spring 14, respectively. The springs 13, 14 are arranged on the plungers 11, 12 such that the inflow spring 13 biases the inflow plunger 11 towards the inflow opening 5 and the actuator body 10 in the first direction relative to the inflow plunger 11 and the outflow spring 14 biases the outflow plunger 12 towards the outflow opening 4 and the actuator body 10 in the second direction relative to the outflow plunger 12. As the first and the second direction are preferably opposite to each other, the inflow spring 13 and the outflow spring 14 urge the inflow plunger 11 and the outflow plunger 12, respectively, and the respective sealing elements 7, 6 towards the opposed inflow opening 5 and outflow opening4, respectively, such that the actuator body 10 is in its rest position in a central balanced initial state as long as the inflow spring 13 and the outflow spring 14 countervail against each other. On the contrary, for the movement of the actuator body 10 to the first direction the outflow spring 14 must be compressed. Therefore, the outflow spring 14 urges the actuator body 10 in the second direction and at the same time the outflow sealing element 6 firmer against the outflow sealing surface 4a of the outflow opening 4.

A force is therefore necessary in this embodiment to overcome the force of the outflow spring 14 when the fluid valve 1 is open at the inflow opening 5. This force can be a magnetic force. The fluid valve 1 may comprise a permanent magnet 22 and a coil 21. The permanent magnet 22 can be fixed to the movable actuator 8 and the coil is preferably fixed in the bottom portion of the valve housing 3. A direct electric current through coil 21 generates a directed magnetic field that exerts a force on the permanent magnet 22 to move to the first or to the second direction dependent on the direction of the direct electric current in the coil 21. If there is no current applied to the coil 21, the forces of the springs 13, 14 urge the actuator 8 in the rest position where the fluid valve 1 is closed at the inflow opening 5 as well as at the outflow opening 4.

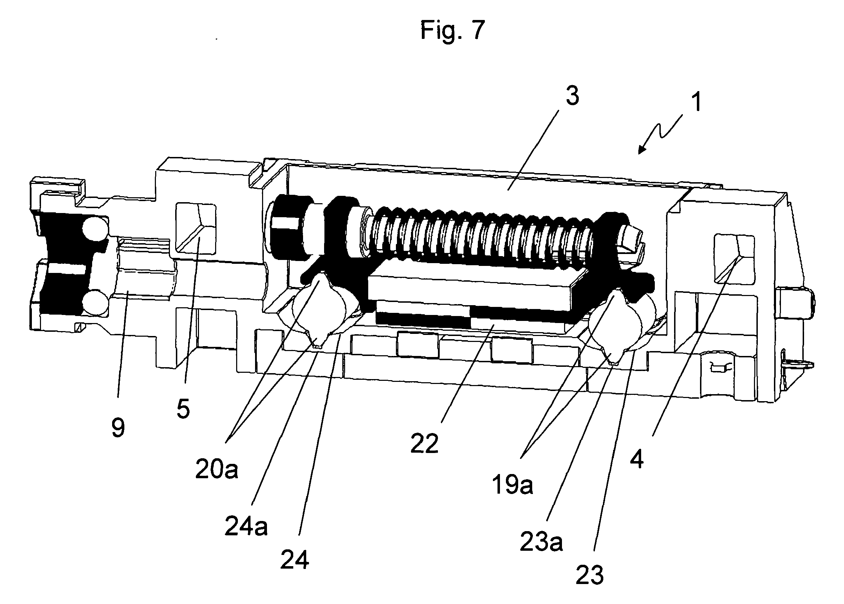

The actuator 8 is in this embodiment bedded on rolls 19, 20 in the valve housing 3 to facilitate the moving operation. Preferably, these rolls 19, 20 comprise at least two projections 19a, 20a, one projecting into a cut in the actuator body and the other projecting into a cut 23a, 24a in the valve housing 3 (see figure 7). To keep the rolls 19, 20 adjusted for a rolling movement in the first and the second direction the actuator body 10 and the valve housing 3 are provided with opposing hutch shaped surfaces 23, 24 framing the rolls 19, 20.

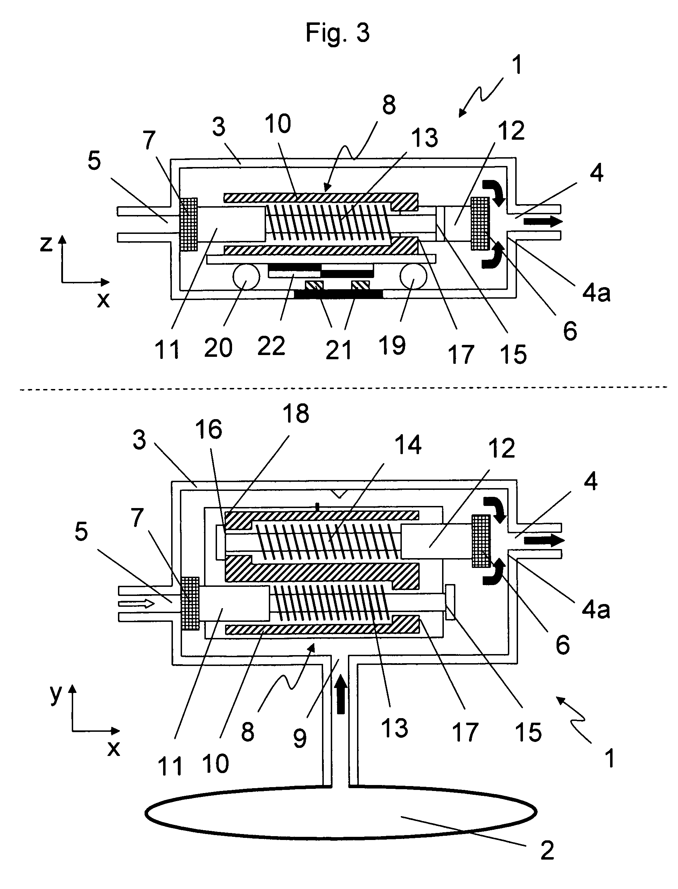

Figure 3 shows the opposite situation when the actuator is moved in the second direction (to the left), i.e. away from the outflow opening 4. The actuator body 10 is in mechanical contact with the outflow sealing element 6 via an outflow plunger 12 that is in sliding contact to the actuator body 10. In this embodiment, the inflow plunger 12 is fed through a hole in the actuator body 10. The outflow sealing element 6 lifts from the outflow sealing surface 4a when the actuator body 10 moves in the second direction, because the plunger 12 comprises a peripheral edge 17 facing towards the outflow opening 4 such that the actuator body 10 contacts the edge 16 with an annular face 18 enclosing the hole where the outflow plunger 12 is fed through and facing away from the outflow opening 4 and pulls the outflow plunger 12 together with the outflow sealing element 6 away from the outflow opening 4. In this state the fluid valve is open at the outflow opening 4 and the fluid chamber 2 can exhaust air via the fluid valve 1. It is important that the inflow sealing element 7 remains rested on the inflow sealing surface 5a such that only deflating of the fluid chamber 2 is possible in this state. The fluid chamber 2 is illustrated as a deflated air bladder and the filled arrows indicate the air flow out of the fluid chamber 2.

For the movement of the actuator body 10 to the second direction the inflow spring 13 must be compressed. Therefore, the outflow spring 14 urges the actuator body 10 in the first direction and at the same time the inflow sealing element 7 firmer against the inflow sealing surface 5a of the inflow opening 5.

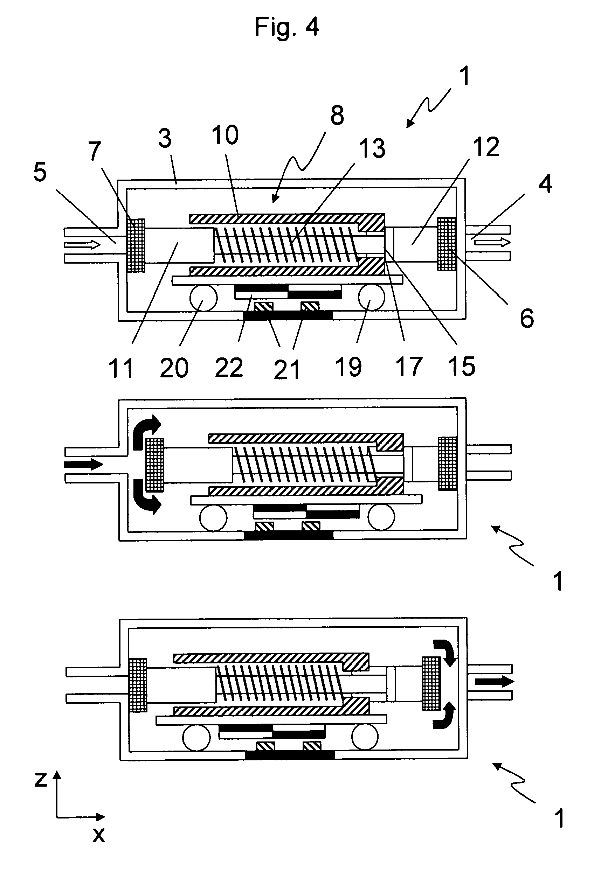

Figure 4 summarises the three states, wherein the top drawing shows the actuator 8 in a central rest position, the centre drawing shows the actuator 8 moved to the first direction and the bottom drawing shows the actuator 8 moved to the second direction.

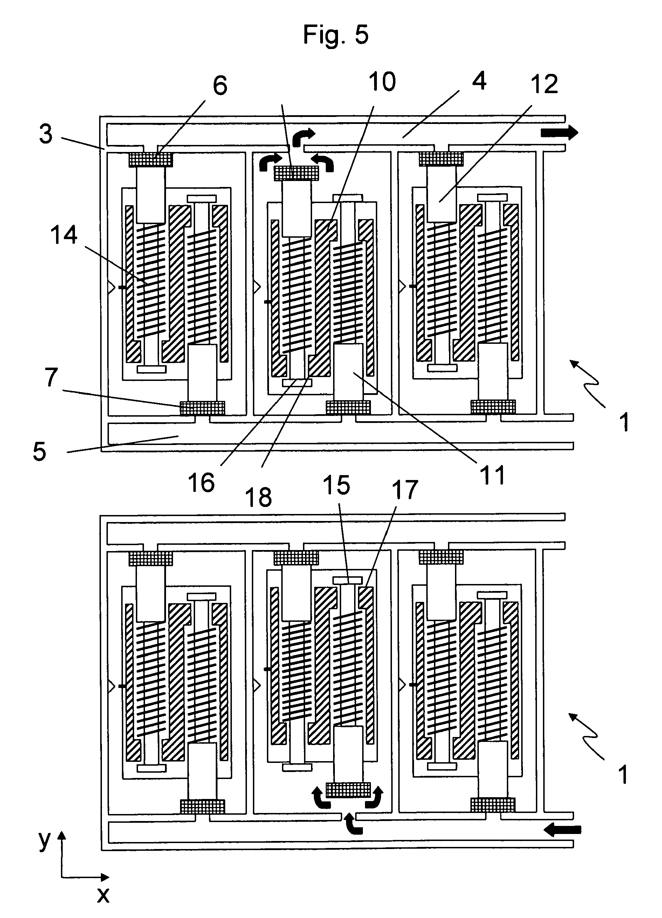

As depicted in figure 5 there is the possibility to connect several fluid valves in parallel such that they share a common inflow channel and a common outflow channel. Each fluid valve 1 can be connected to one fluid chamber (not shown) or they can share a common channel to form one superior fluid valve. For example, massaging or lumbar support in a vehicle seat may require an array of several air bladders that need to be controlled individually. The advantage of a superior fluid valve is that a fluid chamber can be filled or deflated with different gradients. The number of opened or closed fluid valves can therefore control how fast or slow the fluid chamber is filled or deflated.

Figure 5 shows an example where three fluid valves are connected in parallel. The fluid valves 1 have a common outflow channel 4 and a common inflow channel 5. The common inflow channel 5 is connected to a pressure supply (not shown). In the top drawing of figure 5 the central fluid valve 1 is open to deflate a fluid chamber (not shown) as the actuation body 10 is moved to the second direction. The bottom drawing shows the central fluid valve 1 open to the fill the fluid chamber (not shown) as the actuation body 10 is moved to the first direction.

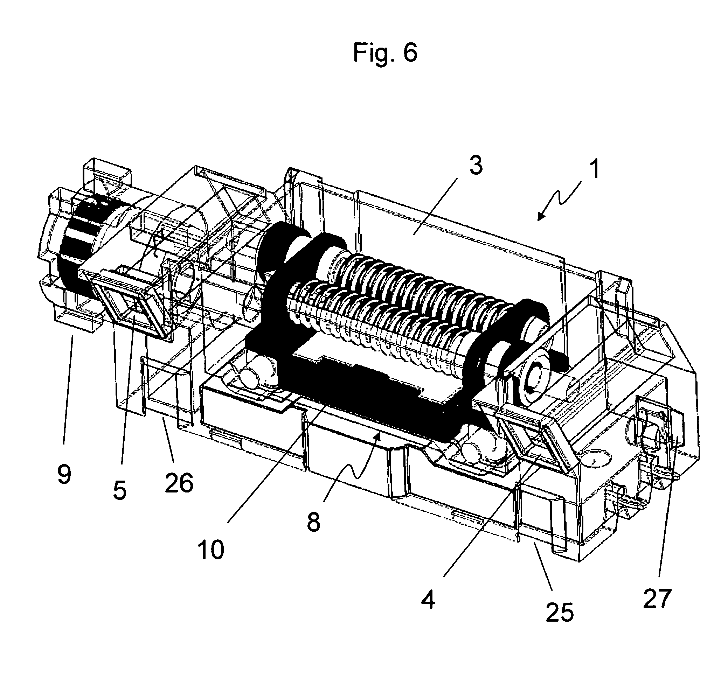

Figure 6 and 7 show a perspective mechanical drawing of a fluid valve 1 that can be connected in parallel to a common inflow channel 5 and a common outflow channel 4 as a phantom view and a longitudinal cross-sectional view, respectively. The embodiment of the common inflow channel 5 and the common outflow channel 4 can bee seen from figure 6 in particular. The common channels 4, 5 extend laterally with respect to the first and second direction. On a first lateral of the fluid valve 1 the openings of the channels 4, 5 protrude the valve housing facing downwards with an inclination. On the second lateral side the openings of the channels 4, 5 are inclined accordingly upwards to receive the counterparts on the first lateral side of another fluid valve to be connected. The fluid valves 1 can be connected by matching grooves 25, 26 and tongues 27 provided on the first and second lateral sides, respectively, of the fluid valves. The common outflow channel 4 and the common inflow channel 5 can therefore be composed of laterally extending portions of the fluid valves 1 plugged together when the fluid valves 1 are connected in parallel.

## Claims

1. A fluid valve (1) for controlling the pressure in a fluid chamber (2) comprising
- a valve housing (3) with an inflow opening (5) connectable to a pressure supply, an outflow opening (4) and an output opening (9) to said fluid chamber (2),
- an actuator (8) having a rest position and being movable in at least two directions, namely a first direction away from the inflow opening (5) and a second direction away from the outflow opening (4),
- said actuator (8) having at least two sealing elements (7, 6), namely an inflow sealing element (7) and an outflow sealing element (6),
- at least two sealing surfaces (5a, 4a), namely an inflow sealing surface (5a) and an outflow sealing surface (4a), arranged in said valve housing (3) enclosing said inflow opening (5) and said outflow opening (4), respectively, such that the fluid is prevented from flowing through the inflow opening (5) and the outflow opening (4), respectively, when said inflow sealing element (7) rests on said inflow sealing surface (5a) and said outflow sealing element (6) rests on said outflow sealing surface (4a), respectively,
**characterised in that**
both said inflow sealing element (7) as well as said outflow sealing element (6) rest on their respective sealing surfaces (5a, 4a) when the actuator (8) is in its rest position.

2. A fluid valve according to claim 1, wherein the fluid valve (1) comprises a permanent magnet (22) and a coil (21), one of which is connected to said actuator (8) and the other one is stationary,
such that the actuator (8) moves in the first direction when a current flows through the coil in one direction, the actuator (8) moves in the second direction when a current flows through the coil (21) in the other direction and the actuator (8) is in its rest position when no current flows through the coil (21).

3. A fluid valve according to claim 1 or 2, wherein said actuator (8) comprises an actuator body (10) that is in mechanical contact with said inflow sealing element (7) and said outflow sealing element (6), such that
the inflow sealing element (7) lifts from the inflow sealing surface (5a) when the actuator body (10) moves in the first direction while the outflow sealing element (6) remains rested on the outflow sealing surface (4a),
the outflow sealing element (6) lifts from the outflow sealing surface (4a) when the actuator body (10) moves in the second direction while the inflow sealing element (7) remains rested on the inflow sealing surface (5a).

4. A fluid valve according to any one of the preceding claims, wherein the inflow opening (5) and the outflow opening (4) are arranged at opposite ends of the valve housing (3) such that said first and said second direction are opposite to each other.

5. A fluid valve according to any one of the preceding claims, wherein the actuator (8) is rectilinearly movable.

6. A fluid valve according to any one of the preceding claims, wherein the actuator (8) is slidably mounted in said valve housing (3).

7. A fluid valve according to any one of the preceding claims, wherein the actuator (8) is bedded on rolls (19, 20) in the valve housing (3).

8. A fluid valve according to any one of the preceding claims, wherein said sealing elements (7, 6) are mounted on separate plungers (11, 12), namely an inflow plunger (11) and an outflow plunger (12).

9. A fluid valve according to claim 8, wherein the plungers (11, 12) are in sliding contact with said actuator body (10).

10. A fluid valve according to claim 7 or 8, wherein the inflow plunger (11) comprises a peripheral edge (15) facing towards the inflow opening (5) such that said actuator body (10) contacts said edge (15) with a face (17) of the actuation body (10) facing away from the inflow opening (5) and pulls the inflow plunger (11) away from the inflow opening (5) to lift the inflow sealing element (7) from the inflow sealing surface (5a) when the actuator body (10) is moved in the first direction,
and
the outflow plunger (12) comprises a peripheral edge (16) facing towards the outflow opening (4) such that said actuator body (10) contacts said edge (16) with a face (18) of the actuation body (10) facing away from the outflow opening (4) and pulls the outflow plunger (12) away from the outflow opening (4) to lift the outflow sealing element (6) from the outflow sealing surface (4a) when the actuator body (10) is moved in the second direction.

11. A fluid valve according to claim 9, wherein said faces (17, 18) of the actuation body (10) facing away from the inflow opening (5) and the outflow opening (4), respectively, are annular faces (17, 18) enclosing separate holes in the actuator body (10) where the inflow plunger (11) and the outflow plunger (12), respectively, are fed through.

12. A fluid valve according to one of the claims 8 to 11, wherein said inflow plunger (11) is provided with an inflow spring (13) biasing the inflow plunger (11) towards the inflow opening (5) and the actuator body (10) in the first direction relative to the inflow plunger (11) and said outflow plunger (12) is provided with an outflow spring (14) biasing the outflow plunger (12) towards the outflow opening (4) and the actuator body (10) in the second direction relative to the outflow plunger (12).

13. A fluid valve according to claim 11, wherein upon movement of the actuator body (10) in the first direction the outflow spring (14) is compressed such that the outflow spring (14) urges the actuator body (10) in the second direction and upon movement of the actuator body (10) in the second direction the inflow spring (13) is compressed such that the inflow spring (13) urges the actuator body (10) in the first direction.

14. A fluid valve according to claim 12 or 13, wherein said inflow spring (13) and outflow spring (14), respectively, urge the inflow plunger (11) and the outflow plunger (12), respectively, and the respective sealing elements (7, 6) towards the opposed inflow opening (5) and outflow opening (4), respectively, such that the actuator body (10) is in its rest position in a central balanced initial state.

15. A fluid valve according to claim 7, wherein said rolls comprise at least two projections (19a, 20a), one projecting into a cut in the actuator body (10) and the other projecting into a cut (23a, 24a) in the valve housing (3).

16. A fluid valve according to claim 7 or 15, wherein the actuator body (10) and the valve housing (3) are provided with opposing hutch shaped surfaces (23, 24) framing the rolls (19, 20).

17. A fluid valve according to any one of the preceding claims, wherein the fluid valve (1) comprise means (25, 26, 27) for connecting multiple fluid valves (1) in parallel such that they have a common outflow channel (4) and a common inflow channel (5).

18. A fluid valve according to claim 17, wherein the means for connecting multiple fluid valves (1) in parallel are grooves (25, 26) and tongues (27) provided on the one and the other lateral side of the fluid valve (1), respectively.

19. A fluid valve according to claim 17 or 18, wherein the common outflow channel (4) and the common inflow channel (5) extend laterally and are composed of laterally extending portions of the fluid valves (1) plugged together when the fluid valves (1) are connected in parallel.

20. Variable support vehicle seat system, comprising a seat including an inflatable fluid chamber (2), a supply for pressurised fluid, and a fluid valve (1) according to any preceding claim, wherein said fluid valve is connected with its inflow opening (5) to the supply for pressurised fluid and with its output opening (9) the inflatable fluid chamber (2).
